## Europäisches Patentamt
## European Patent Office
## Office européen des brevets

(11) Veröffentlichungsnummer: **0 112 935**
**B1**

(12) **EUROPÄISCHE PATENTSCHRIFT**

(45) Veröffentlichungstag der Patentschrift:
26.02.86

(21) Anmeldenummer: 82112113.4

(22) Anmeldetag: 30.12.82

(51) Int. Cl.⁴: **A 47 J 31/057**, A 47 J 31/50, H 05 B 3/68

(54) Elektrische Heizeinrichtung für Kaffeemaschinen.

(43) Veröffentlichungstag der Anmeldung:
11.07.84 Patentblatt 84/28

(45) Bekanntmachung des Hinweises auf die Patenterteilung:
26.02.86 Patentblatt 86/9

(84) Benannte Vertragsstaaten:
AT CH DE FR GB IT LI

(56) Entgegenhaltungen:
DE - A - 2 112 517
DE - A - 2 525 156
DE - C - 305 226
DE - U - 7 501 158
FR - A - 388 958
FR - A - 585 090
FR - A - 887 132
FR - A - 2 148 444

(73) Patentinhaber: ELPAG AG CHUR, Quaderstrasse 11, CH-7001 Chur (CH)

(72) Erfinder: Bleckmann, Ingo, Dipl.-Ing. Dr.mont., Ignaz-Rieder-Kai 11, A-5020 Salzburg (AT)

(74) Vertreter: Patentanwälte Liedl, Nöth, Steinsdorfstrasse 21-22, D-8000 München 22 (DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1986

## Beschreibung

Die Erfindung betrifft eine Kaffeemaschine mit den Merkmalen des Oberbegriffes des Anspruches 1.

Bei den bekannten Ausführungsformen treten in dem wärmespeichernden Block aus keramischem Material relativ große Temperaturdifferenzen, z. B. von 40°C bis 75°C auf, z. B. gemessen vom Rand zur Mitte der Abstellplatte. Die Abstellplatte für die Kaffeekanne sollte jedoch eine möglichst gleichmäßige Temüeratur um 80°C haben mit einer Temperaturdifferenz von maximal 5 bis 10°C zwischen Mitte und Rand der Abstellplatte. Starke Temperaturdifferenzen bewirken, daß entweder an bestimmten Stellen die Siedetemperatur des hergestellten Aufgußgetränkes überschritten oder die erwünschte Filtrattemperatur von 80°C nicht erreicht wird. Temperaturen über der Siedetemperatur sind jedoch für die Geschmacksentwicklung des Aufgußgetränkes, insbesondere wenn es sich um Kaffee handelt, schädlich.

Die Umkleidung des wärmespeichernden Blockes mit Blech, insbesondere zum Zweck der Schaffung einer metallischen Abstellfläche für die Kaffeekanne, bringt kostenmäßig Probleme mit sich, die im Zuge eines Massenartikels schwer zu bewältigen sind. Materialien mit sehr hoher Wärmekapazität sind relativ teuer. Die Formung derartiger Materialien in Blöcke, Tafeln oder dgl. ist ebenfalls schwierig zu bewerkstelligen, wobei jeweils zu berücksichtigen ist, daß ja die elektrische Heizeinrichtung, z. B. ein Rohrheizkörper, in die Masse eingebettet werden muß.

Ein erheblicher Nachteil ergibt sich jedoch durch die Rißbildung in dem wärmespeichernden Block aus keramischem Material, sei es bei der Bearbeitung des Blockes, bei dem Einpassen des Rohrheizkörpers, bei der Ummantelung des Blockes oder sei es im Betrieb durch die erwähnten relativ großen Temperaturdifferenzen.

Aus der DE-A-2 525 156 (ALBRECHT) ist eine elektrisch beheizbare Kanne für Kaffee bekannt geworden, in deren Bodenteil ein elektrischer Heizdraht eingelegt ist, der mit einem an der Kanne angeordneten Teil einer Steckerkupplung versehen ist. Der Bodenteil der Kanne soll so dick sein und aus solchem Material bestehen, daß seine Wärmekapazität mindestens gleich einem erheblichen Teil der Wärmekapazität des in die Kanne einfüllbaren Wassers ist. Die elektrisch beheizbare Kanne kann Teil einer elektrischen Kaffeemaschine sein. Wenn also die Steckerkupplung geschlossen ist und die Kaffeemaschine abgestellt ist, dann befindet sich der Heißwasserauslauf der Kaffeemaschine über der Kanne bzw. über einem auf die Kanne aufgesetzten Kaffeefilter.

Als nachteilig wird bei der bekannten Vorrichtung angesehen, daß bei Bruch der Kaffeekanne - was erfahrungs-gemäß öfters vorkommt - eine neue relativ teure Kaffeekanne mit elektrisch beheizbarem Boden beschafft werden muß. Andere übliche Kaffeekannen können mit der Kaffeemaschine nicht betrieben werden. Wenn infolge der thermischen Belastung sich beispielsweise ein Riß im Boden der elektrischen Kaffeekanne bildet, dann dringt Wasser in das keramische Material des Bodens ein, wodurch ein elektrischer Kontakt mit entsprechender Gefährdung zu dem Heizdraht hergestellt wird.

Die FR-A-585 090 (DUBOIS) zeigt eine elektrisch beheizbare Kochplatte, bei der ein elektrischer Heizdraht in einem pulverförmigen Material, z.B. Kaolin, eingebettet ist, das in einem pfannenförmigen Gefäß untergebracht ist. Derartige Einrichtungen sind nicht zur Zusammenarbeit mit Kaffeemaschinen geeignet.

In ähnlicher Weise ist aus der FR-A-388 958 (L'ELECTRICITE MODERNE) eine Warmhalteplatte bekannt geworden, bei der ein elektrischer Heizwiderstand in pulverförmigem Material, z.B. in Barytsulfat, eingebettet ist. Auch die dort beschriebene Warmhalteplatte ist nicht zum Zusammenwirken mit einer Kaffeemaschine bestimmt oder geeignet.

Aus der FR-A-887 132 (LABRUT) ist ein Rechaud bekannt geworden, welcher aus einem z.B. im Querschnitt dreieckigen Körper aus Porzellan besteht, in welchem ein elektrischer Heizwiderstand, z.B. in Salz eingebettet, untergebracht ist. Auch diese Konstruktion ist nicht zur Zusammenarbeit mit Kaffeemaschinen o.dgl. bestimmt oder geeignet.

Der Erfindung liegt die Aufgabe zugrunde, eine Kaffeemaschine vorzuschlagen, welche einerseits die Vorteile der zuerst genannten Kaffeemaschine hat, bei der also während der Kaffeebereitung in der Kaffeemaschine der Boden der Kaffeekanne aufgeheizt wird und bei der die Kaffeekanne auch nach Herausnahme aus der Kaffeemaschine und beispielsweise Abstellen auf einen Tisch warmgehalten wird, bei der jedoch die genannten Nachteile vermieden sind.

Die Lösung der genannten Aufgabe ergibt sich aus den Merkmalen des Hauptanspruches. Die abhängigen Ansprüche beschreiben bevorzugte Ausführungsformen.

Auf der Zeichnung ist schematisch eine Ausführungsform gemäß der Erfindung dargestellt. Es zeigen:

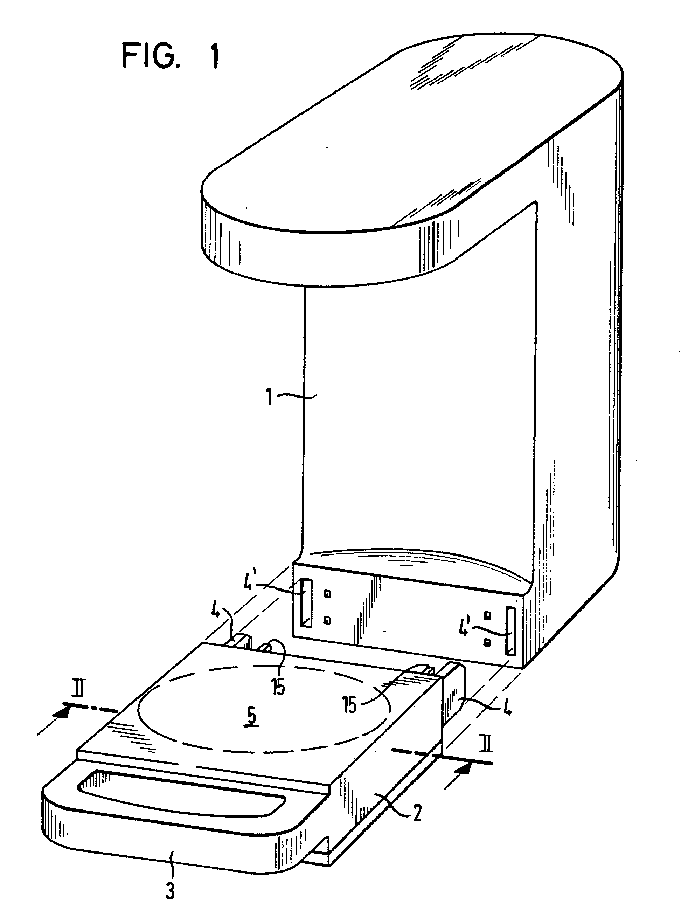

Fig. 1 schaubildlich eine Kaffeemaschine mit abgezogener Warmhalteplatte;

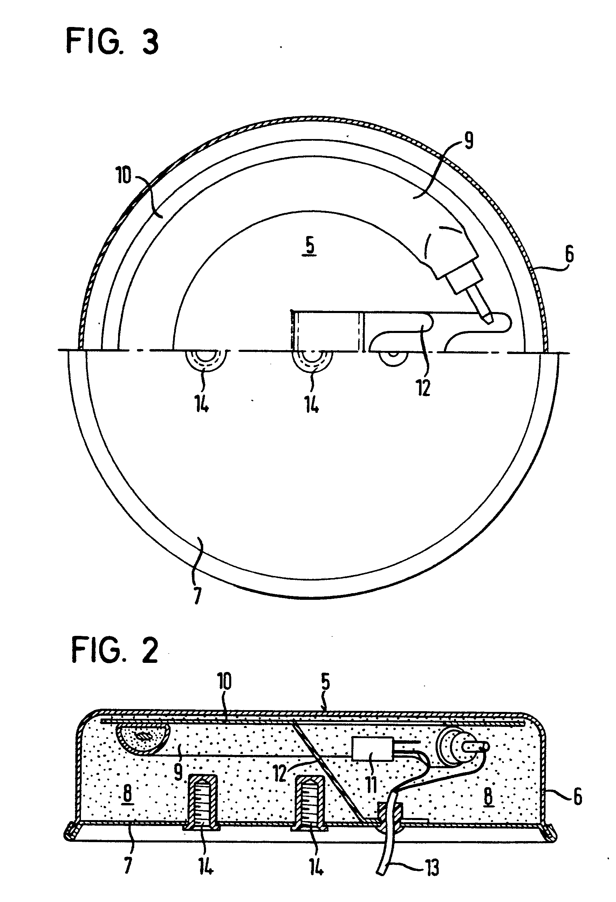

Fig. 2 einen Schnitt der Warmhalteeinrichtung längs der Linie II-II in Fig. 1;

Fig. 3 eine ausgebrochene Draufsicht auf die Warmhalteeinrichtung und

Fig. 4 ein Heizdiagramm.

Mit einer Kaffeemaschine 1 herkömmlicher Bauart ist eine Abstell- und Warmhalteeinrichtung 2 lösbar verbunden, die beispielsweise mittels des Handgriffes 3 aus der Steckverbindung 4, 4' gezogen werden kann.

Die Abstell- und Warmhalteeinrichtung 2 besitzt eine Abstellfläche 5 für eine Kaffeekanne 16 oder ein Gefäß zur Aufnahme des bereiteten Aufgußgetränkes, welche von denn Boden einer Schale 6 aus Metall gebildet wird, die mittels eines Deckels 7, z. B. durch Umbördelung, verschlossen ist. Die Schale 6 ist mit körnigem Material 8 gefüllt, welches eine relativ hohe Wärmekapazität hat. Bevorzugt werden Zirkonoxid, Magnesiumoxid oder auch Härtesalze, wie sie zum Härten von Stahl vervendet werden. In Fällen, in denen nicht so hohe Ansprüche an die Wärmekapazität gestellt werden, kann z. B. auch einfacher Sand verwendet werden.

Die Materialien können eine relativ schlechte Wärmeleitfähigkeit haben. Während also bei bekannten blockartigen Warmhalteeinrichtungen die schlechte Wärmeleitfähigkeit zu starken Temperaturdifferenzen und damit zur Rißbildung führt, ist eine derartige Rißbildung bei der neuen Ausbildung nicht zu befürchten, da ja das Material körnig ist und sich dementsprechend Wärmespannungen ausgleichen können. In das körnige Material 8 mit hoher Wärmekapazität taucht ein Rohrheizkörper 9 ein bzw. der Rohrheizkörper 9 ist in dem körnigen Material eingebettet. Der Rohrheizkörper ist an einer Metallplatte 10 befestigt, und zwar bevorzugt mittels eines Kaltverbindungsverfahrens oder auch mittels eines Löt- oder Schweißverfahrens. Die Metallplatte 10 bewirkt eine gleichmäßige Wärmeverteilung auf die Abstellfläche 5 für eine Kaffeekanne 16, so daß die Abstellfläche 5 eine ziemlich gleichmäßige Temperatur annimmt. Die Temperaturdifferenz zwischen der Mitte der Abstellfläche 5 und den Randbereichen beträgt bei der dargestellten Ausführungsform maximal 5°C.

Der Rohrheizkörper 9 ist über einen Sicherheitsausschalter 11 und das Kabel 13 elektrisch mit den An-schlußsteckern 15 verbunden. Ein aus der Platte 10 ausgestanzter Lappen 12 gewährleistet, daß die Metallplatte 10 an den Boden der Schale 6 angedrückt wird. Er verhindert weiterhin ein Verdrehen der Metallplatte 10 und dadamit z. B. ein Abreißen des Anschlußkabels 13 von den Rohrheizkörperenden.

Die Sacklochgewinde 14 dienen zur Befestigung eines Temperaturreglers und der Bauteile.

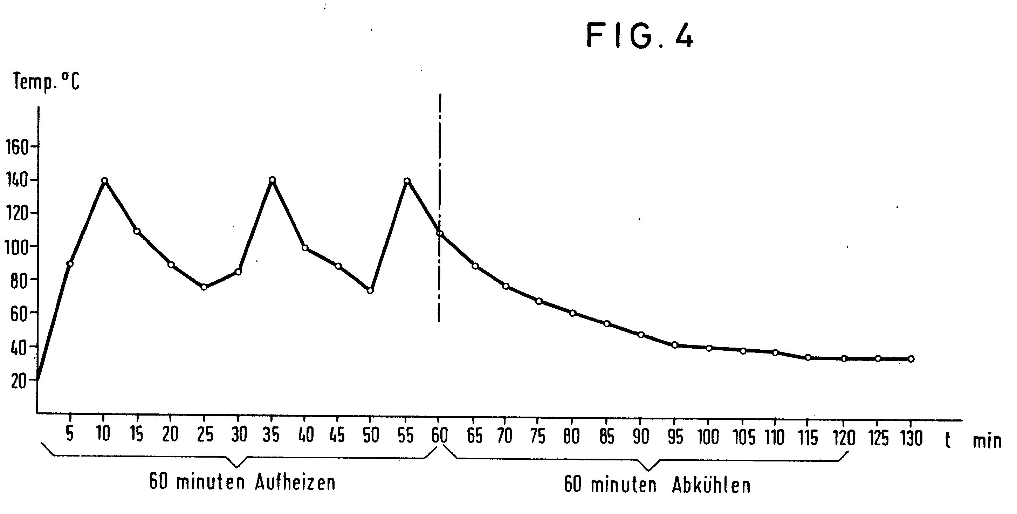

Das Diagramm in Fig. 4 zeigt, daß nach der Aufheizperiode - bei der ein Thermostat jeweils bei Erreichen der Höchsttemperatur von 140°C abschaltet - und die selbstverständlich auch kürzer gehalten werden kann, ein Warmhalten des Aufgußgetränkes über eine Stunde gewährleistet ist.

**Patentansprüche**

1. Kaffeemaschine, bei der ein Rohrheizkörper (9) unter einer Abstellfläche (5) für eine Kaffeekanne zwecks Warmhaltung des fertiggestellten Kaffees angeordnet ist, gekennzeichnet durch die Kombination folgender Merkmale:

a) Die Abstellfläche (5) wird von dem Boden einer mit körnigem Material (8) hoher Wärmekapazität gefüllten Schale (6) gebildet, wobei der Rohrheizkörper (9) in dem körnigen Material (8), welches eine relativ hohe Wärmekapazität hat, eingebettet ist,

b) die Schale (6) mit dem Rohrheizkörper (9) ist über eine Steckverbindung (4, 4') mit einer herkömmlichen Kaffeemaschine (1) mechanisch und elektrisch lösbar verbunden.

2. Kaffeemaschine nach Anspruch 1, dadurch gekennzeichnet, daß der Rohrheizkörper (9) an einer Metallplatte (10) mittels eines Kaltverbindungsverfahrens oder eines Löt- und Schweißverfahrens befestigt ist.

3. Kaffeemaschine nach Ansprüchen 1 oder 2, da-durch gekennzeichnet, daß der Deckel (7) an der Schale (6) durch entsprechende Umbördelung befestigt ist.

4. Kaffeemaschine nach Ansprüchen 1 bis 3, dadurch gekennzeichnet, daß die Schalenöffnung bzw. der Deckel quadratisch oder rechteckig sind.

5. Kaffeemaschine nach Ansprüchen 1 bis 3, dadurch gekennzeichnet, daß der Schalenrand bzw. der Deckel kreisförmig sind.


**Claims**

1. A coffee machine wherein a tubular heater member (9) is disposed beneath a support surface (5) for standing a coffee pot thereon, to keep the prepared coffee hot, characterised by the combination of the following features:

a) The support surface (5) is formed by the bottom portion of a shell (6) which is filled with granular material (8) with a high thermal capacity, wherein the tubular heater member (9) is embedded in the granular material (8) which has a relatively high thermal capacity,

b) The shell (6) with the tubular heater member (9) is mechanically and electrically releasably connected to a conventional coffee machine (1) by way of a plug connection (4, 4').

2. A coffee machine according to claim 1 characterised in that the tubular heater member (9) is secured to a metal plate (10) by means of a cold joining process or a soldering and welding process.

3. A coffee machine according to claim 1 or claim 2 characterised in that the cover (7) is secured to the shell (6) by suitable flangingover.

4. A coffee machine according to claims 1 to 3 characterised in that the shell opening and the cover are square or rectangular.

5. A coffee machine according to claims 1 to 3 characterised in that the edge of the shell and the cover are circular.

**Revendications.**

1. Machine à faire le café dans laquelle un corps chauffant tubulaire (9) est placé sous une surface support (5) pour une verseuse à café aux fins de maintenir au chaud le café préparé, caractérisée par la combinaison des caractéristiques suivantes:

a) la surface support (5) est constituée par le fond d'une cuvette (6) remplie d'un matériau granulaire (8) de capacité thermique élevée, l'élément chauffant tubulaire (9) étant noyé dans le matériau granulaire (8) de capacité thermique relativement élevée,

b) la cuvette (6) contenant le corps chauffant tubulaire (9) est reliée de façon amovible, mécaniquement et électriquement, par l'intermédiaire d'une liaison par fiches (4, 4') à une machine usuelle à faire le café (1).

2. Machine à faire le café selon la revendication 1, caractérisée en ce que le corps chauffant tubulaire (9) est fixé sur une plaque métallique (10) par un procédé de liaison à froid, ou par un procédéde brasage et de soudage.

3. Machine à faire le café selon les revendications 1 ou 2, caractérisée en ce que le couvercle (7) est fixé à la cuvette (6) en rabattant le bord de façon appropriée.

4. Machine à faire le café selon les revendications 1 à 3, caractérisée en ce que l'ouverture de la cuvette et le couvercle sont carrés ou rectangulaires.

5. Machine à faire le café selon les revendications 1 à 3, caractérisée en ce que le bord de la cuvette et le couvercle sont circulaires.

FIG. 1

# FIG. 3

# FIG. 2

FIG.4

60 minuten Aufheizen

60 minuten Abkühlen